# EUROPÄISCHE PATENTSCHRIFT

(11) **EP 3 154 862 B1**
(45) Veröffentlichungstag und Bekanntmachung des Hinweises auf die Patenterteilung: **05.05.2021**
(21) Anmeldenummer: 15713379.4
(22) Anmeldetag: 25.03.2015
(51) Int. Cl.: B65B 19/10, B65D 85/10, B65G 47/52, B65B 61/20, B65B 19/22, A24F 15/00

(54) **VERFAHREN UND VORRICHTUNG ZUM HERSTELLEN VON PACKUNGEN FÜR ZIGARETTEN, SOWIE PACKUNG FÜR ZIGARETTEN**
METHOD AND APPARATUS FOR PRODUCING PACKS FOR CIGARETTES, AND PACK FOR CIGARETTES
PROCÉDÉ ET DISPOSITIF DE PRODUCTION DE PAQUETS DE CIGARETTES, ET PAQUET DE CIGARETTES

(30) Priorität: 16.06.2014 DE 102014108423; 17.11.2014 DE 102014116784
(43) Veröffentlichungstag der Anmeldung: 19.04.2017
(73) Patentinhaber: Focke & Co. (GmbH & Co. KG), 27283 Verden (DE)
(72) Erfinder: RUTHEMEIER, Sven, 27308 (Armsen) Kirchlinteln (DE); STILLER, Sebastian, 27283 Verden (DE); SOMMER, Corvyn, 27283 Verden (DE)
(74) Vertreter: Ellberg, Nils
(86) Internationale Anmeldenummer: PCT/EP2015/000633
(87) Internationale Veröffentlichungsnummer: WO 2015/192925

(56) Entgegenhaltungen:
- EP-A1- 2 008 935
- EP-A1- 2 008 935
- EP-A1- 2 703 304
- EP-A1- 2 703 304
- EP-A1- 2 986 540
- DE-U1- 7 629 556
- DE-U1- 7 629 556
- GB-A- 588 741
- GB-A- 588 741
- US-B1- 6 450 329
- US-B2- 7 954 635

## Beschreibung

Die Erfindung betrifft eine Packung für Zigaretten, gemäß dem Oberbegriff des Anspruchs 1.

Aufgrund gesetzlicher Vorschriften kann der Gestaltungsspielraum bei der Konstruktion bzw. dem Design von Packungen für Zigaretten in einzelnen Ländern stark eingeschränkt sein, oder mit einer solchen Einschränkung ist in absehbarer Zeit zu rechnen. Insbesondere ist davon auszugehen, dass Packungen für Zigaretten nur noch bestimmte Abmessungen aufweisen dürfen, sodass eine Anpassung der Abmessungen der Packungen an die entsprechenden Abmessungen des Packungsinhalts schwierig oder sogar unmöglich wird.

In US 6,450,329 B1 und US 7,954,635 B2 werden vor diesem Hintergrund Füllstücke als Packungsinhalt vorgeschlagen, die flexible Abmessungen aufweisen. Hierzu werden die Füllstücke durch mehrfaches Falten eines Zuschnitts aus Verpackungsmaterial gebildet, sodass eine ziehharmonikaartige Gestalte entsteht, deren Abmessungen sich an den Packungsinhalt anpassen können. Die Handhabung solcher Füllstücke im Verpackungsprozess ist jedoch eher kompliziert, da vermieden werden muss, dass sich die Füllstücke ungewollt entfalten. US 7,954,635 B2 zeigt eine Packung gemäß dem Oberbegriff des Anspruchs 1 (siehe insbesondere Fig. 11).

Hiervon ausgehend liegt der Erfindung die Aufgabe zugrunde eine Packung vorzuschlagen, die eine möglichst einfache Lösung bietet, um Packungsinhalte mit unterschiedlichen Abmessungen auf einfache Weise verpacken zu können.

Eine erfindungsgemäße Packung für Zigaretten weist die Merkmale des Anspruchs 1 auf.

Bevorzugte Ausführungsbeispiele der Erfindung werden nachfolgend anhand der Zeichnung beschrieben. In dieser zeigen Fig. 23, 25 bis 27, 29 und 30 Ausführungsbeispiel der Erfindung. Die anderen Fig. dienen lediglich zur Erläuterung und stellen keine Ausführungsbeispiele der Erfindung dar. Es zeigt:
- Fig. 1: eine Packung für Zigaretten mit geöffnetem Deckel in räumlicher Darstellung,
- Fig. 2: einen Horizontalschnitt durch die Packung gemäß Fig. 1 entlang Schnittebene II - II,
- Fig. 3 bis 5: drei Varianten der Packung gemäß Fig. 1 und 2,
- Fig. 6: einen Abschnitt einer Vorrichtung zum Herstellen von Packungen der gezeigten Art in schematischer räumlicher Darstellung,
- Fig. 7: einen Vertikalschnitt durch die Vorrichtung entlang Schnittlinie VII - VII in Fig. 6,

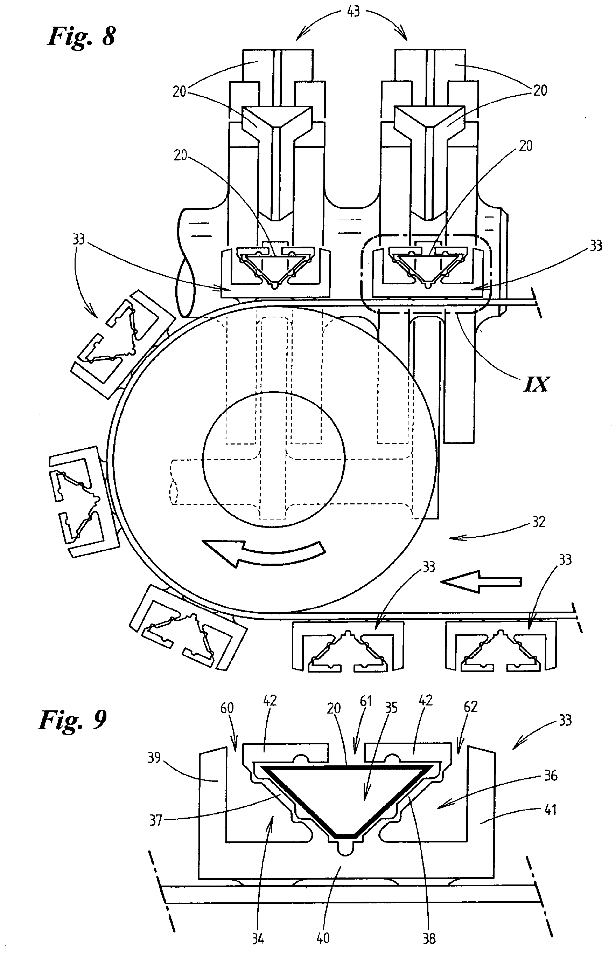

- Fig. 8: eine Seitenansicht der Vorrichtung in Blickrichtung entsprechend Pfeil VIII in Fig. 7,
- Fig. 9: eine Einzelheit der Vorrichtung im Bereich IX in Fig. 8 in teilweiser vergrößerter Darstellung,
- Fig. 10: einen Vertikalschnitt durch die Vorrichtung entlang Schnittlinie X - X in Fig. 6,
- Fig. 11: einen Vertikalschnitt durch die Vorrichtung entlang Schnittlinie XI - XI in Fig. 10,
- Fig. 12: einen Vertikalschnitt durch die Vorrichtung entlang Schnittlinie XII - XII in Fig. 6,

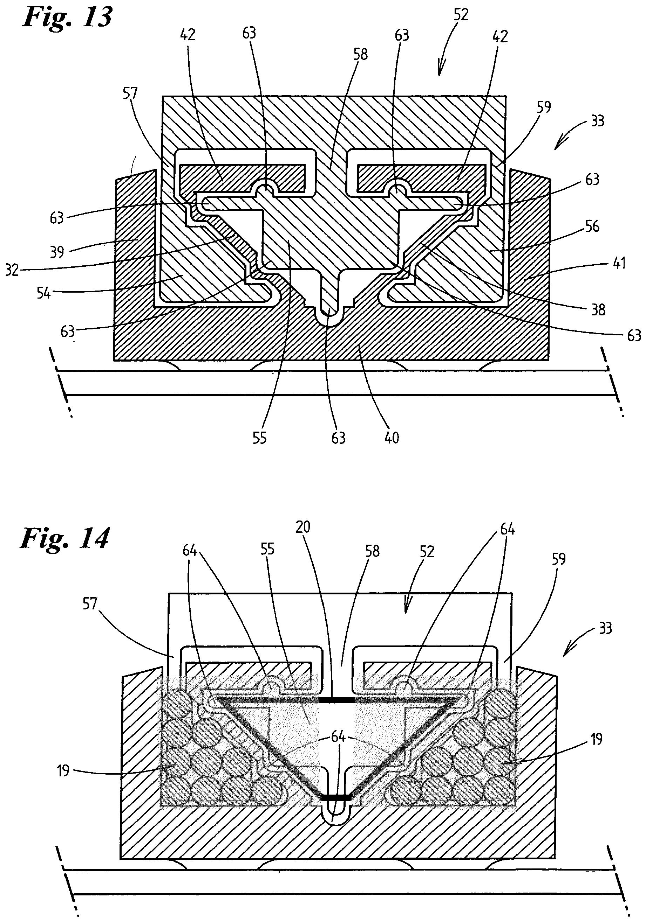

- Fig. 13: einen Vertikalschnitt durch die Vorrichtung entlang Schnittlinie XIII - XIII in Fig. 12,
- Fig. 14: einen Vertikalschnitt durch die Vorrichtung entlang Schnittlinie XIV - XIV in Fig. 12,
- Fig. 15: eine Seitenansicht der Vorrichtung im Bereich XV in Fig. 6,
- Fig. 16: eine Seitenansicht eines Teils der Vorrichtung in Blickrichtung entsprechend Pfeil XVI in Fig. 15,
- Fig. 17: einen weiteren Abschnitt einer Vorrichtung zum Herstellen von Packungen der gezeigten Art in schematischer räumlicher Darstellung im Anschluss an Fig. 6,
- Fig. 18 bis 21: vier weitere Varianten der Packung gemäß Fig. 1 und 2,
- Fig. 22: ein Füllstück in räumlicher Darstellung,
- Fig. 23: ein weiteres Füllstück in räumlicher Darstellung,
- Fig. 24: eine weitere Variante eines Füllstücks in räumlicher Darstellung,
- Fig. 25: eine weitere Variante einer Packung mit einem Füllstück entsprechend Fig. 23,
- Fig. 26: einen Horizontalschnitt durch die Packung entsprechend Schnittlinie XXVI - XXVI in Fig. 25,
- Fig. 27: ein weiteres Füllstück in räumlicher Darstellung,
- Fig. 28: eine weitere Variante eines Füllstücks in räumlicher Darstellung,
- Fig. 29: eine weitere Variante einer Packung mit einem Füllstück entsprechend Fig. 27,
- Fig. 30: einen Horizontalschnitt durch die Packung entsprechend Schnittlinie XXX - XXX in Fig. 29,
- Fig. 31: einen Zuschnitt für die Herstellung eines Füllstücks gemäß Fig. 23,
- Fig. 32: einen Zuschnitt für die Herstellung eines Füllstücks gemäß Fig. 27, und
- Fig. 33: einen teilweisen Schnitt durch die Packung entlang Schnittlinie XXXIII-XXXIII in Fig. 2.

Die Erfindung wird nachfolgend anhand einer Vorrichtung zum Herstellen von Packungen 10 für Zigaretten 11 erläutert. Es versteht sich, dass die Packungen 10 natürlich auch zur Aufnahme von anderen Packungsinhalten als Zigaretten 11 bestimmt sein können.

Exemplarisch wird die Erfindung anhand einer Packung 10 des Typs Hinge-Lid beschrieben. Der grundsätzliche Aufbau von Packungen dieses Typs ist aus dem Stand der Technik bekannt, weshalb nachfolgend nur die wesentlichen bzw. besonderen Elemente erwähnt werden.

Die Packung 10 des Typs Hinge-Lid besteht aus einem Schachtelteil 12 und einem Deckel 13. Der Deckel 13 ist schwenkbar am Schachtelteil 12 befestigt, nämlich im Bereich eines rückseitigen Liniengelenks. Schachtelteil 12 und Deckel 13 werden durch Falten eines gemeinsamen Zuschnitts in bekannter Weise hergestellt.

Im Schachtelteil 12 ist im vorliegenden Fall ein Kragen 14 angeordnet, der aus dem oben offenen Schachtelteil 12 herausragt. Der Kragen 14 verfügt über eine Kragen-Vorderwand 15 sowie jeweils hierzu benachbarte Kragen-Seitenwände 16, die innenseitig an entsprechenden Wandungen des Schachtelteils 12 anliegen, nämlich im Bereich der Schachtel-Vorderwand 17 sowie der beiden Schachtel-Seitenwände 18. Die Schachtel-Seitenwände 18 sind wie üblich durch einander überdeckende und durch Klebung miteinander verbundene Faltlappen gebildet.

Ferner ist im Schachtelteil 12 ein Packungsinhalt angeordnet, nämlich im vorliegenden Fall eine oder mehrere Gruppen 19 von Zigaretten 11. Eine Besonderheit besteht darin, dass die Zigarettengruppe 19 bzw. die Zigarettengruppen 19 zusammen nicht den Querschnitt bzw. Innenraum des Schachtelteils 12 bzw. der Packung 10 ausfüllt bzw. ausfüllen.

Die Zigaretten 11 haben im vorliegenden Ausführungsbespiel einen derartigen Durchmesser, dass ein Teil des Innenraums der Packung 10 bzw. Querschnitts des Schachtelteils 12 nicht gefüllt wird. Mit anderen Worten entsprechen die Abmessungen der bzw. aller Zigarettengruppen 19 nicht den entsprechenden Abmessungen des Innenraums des Schachtelteils 12. Anstelle des Durchmessers der Zigaretten 11 kann natürlich auch alternativ oder zusätzlich die Anzahl der Zigaretten 11 so gewählt sein, dass im Innenraum der Packung 10 ein Hohlraum gebildet wäre, der nicht durch die oder jede Zigarettengruppe 19 gefüllt würde.

Zum Ausgleich der unterschiedlichen Abmessungen des Innenraums der Packung 10 und der oder jeder Zigarettengruppe 19 ist ein zusätzliches Element in der Packung 10 angeordnet. Im Folgenden wird dieses Element als Füllstück 20 bezeichnet. Dieses dient dazu die abweichenden Abmessungen so auszugleichen, dass der Packungsinhalt (Zigarettengruppe(n) und Füllstück(e)) die Packung 10 wie üblich ausfüllt.

Das Füllstück 20 ist gemäß der Erfindung aus einem Verpackungsmaterial gebildet, nämlich durch entsprechende Faltung eines Zuschnitts aus Verpackungsmaterial zur Bildung eines dreidimensionalen Körpers. Das Füllstück 20 wird als Hohlkörper bzw. Hülse ausgebildet. In einer Ausführungsform, die nicht Teil der Erfindung bildet, ist es aber auch denkbar, dass man Füllstücke 20 aus mehr oder weniger massiven Körpern bildet, beispielsweise aus Materialien mit geringer Dichte, die das Gewicht der Packung 10 nicht erheblich erhöhen.

Erfindungsgemäß ist in der Packung 10 das Füllstück 20 gemeinsam mit der oder jeder Zigarettengruppe 10 in eine Innenumhüllung 22 eingehüllt.

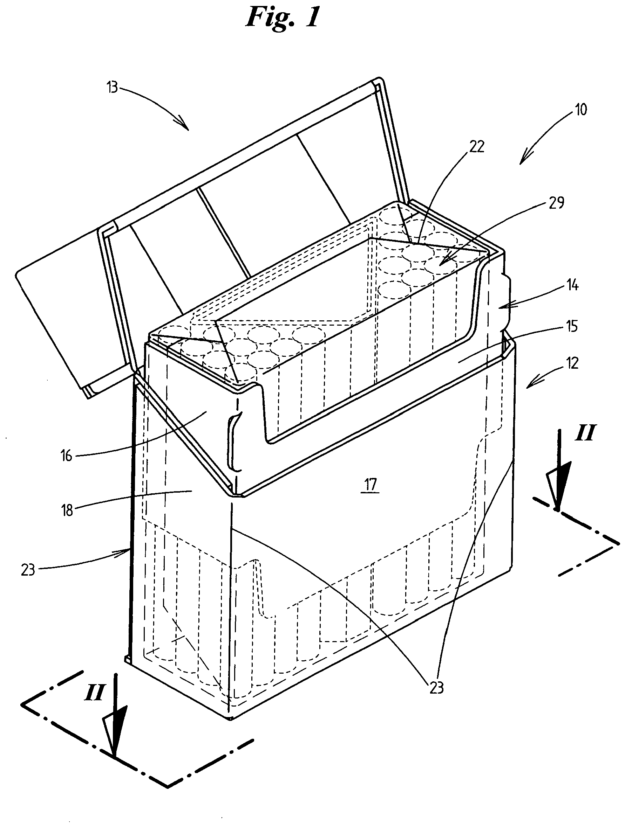

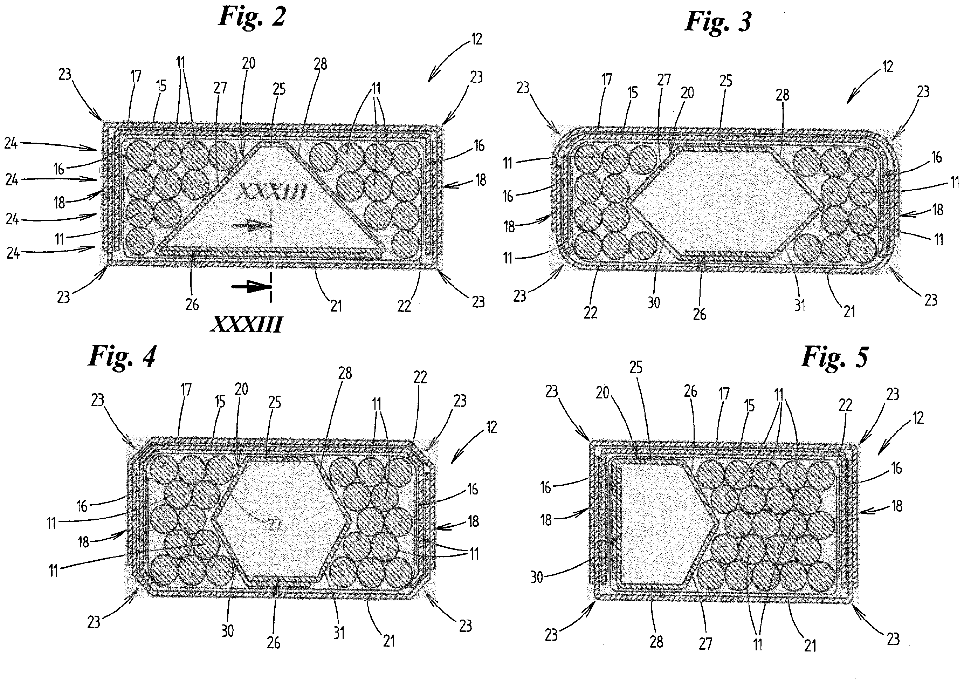

Eine weitere Besonderheit des Ausführungsbeispiels gemäß Fig. 1 und 2, die eine Hinge-Lid-Packung 10 mit rechtwinkligen Packungskanten 23 zeigt, besteht darin, dass zwei Zigarettengruppen 19 in der Packung 10 angeordnet sind, die durch ein Füllstück 20 voneinander getrennt werden.

Im vorliegenden Fall sind die beiden Zigarettengruppen 19 gleich groß bzw. weisen die gleiche Anzahl von Zigaretten 11 auf. Es versteht sich, dass die Zigarettengruppen 19 natürlich auch eine unterschiedliche Größe bzw. eine unterschiedliche Anzahl von Zigaretten 11 beinhalten können. Ferner versteht es sich, dass auch mehr oder weniger als zwei Zigarettengruppen 19 vorgesehen sein können. Entsprechend ist die erfindungsgemäße Packung 10 auch nicht darauf beschränkt, dass nur ein Füllstück 20 vorhanden ist, sondern es können auch mehrere Füllstücke 20 in der Packung 10 angeordnet sein.

Die Anzahl der Füllstücke 20 kann geringer als die Anzahl der Zigarettengruppen 19 sein. Alternativ kann die Anzahl der Füllstücke 20 natürlich auch gleich der Anzahl der Zigarettengruppen 19 sein. Eine weitere Alternative kann darin bestehen, dass eine größere Anzahl an Füllstücken 20 in der Packung 10 vorgesehen sind als die Anzahl der Zigarettengruppen 19.

In dem in Fig. 1 und 2 gezeigten Ausführungsbeispiel sind die beiden Zigarettengruppen 19 jeweils in einem Eckbereich der Packung 10 angeordnet, nämlich in einem etwa dreieckigen Bereich zwischen den Schachtel-Seitenwänden 18 und der Schachtel-Vorderwand 17.

Die Zigaretten 11 sind in mehreren parallelen Reihen 24 angeordnet und in Normallage zueinander positioniert, wobei die Anzahl der Zigaretten 11 in den Reihen 24 ausgehend von der Schachtel-Vorderwand 17 in Richtung der Schachtel-Rückwand 21 jeweils abnimmt. Im vorliegenden Fall ist eine 4-3-2-1-Formation vorgesehen.

Entsprechend der Formation und der Anordnung der beiden Zigarettengruppen 19 ist das Füllstück 20 zentral zwischen den beiden Zigarettengruppen 19 angeordnet.

Das Füllstück 20 ist im vorliegenden Fall als aufrecht in der Packung 10 bzw. dem Schachtelteil 12 stehende Hülse ausgebildet.

Die Form des Füllstücks 20 entspricht im Querschnitt etwa einem Trapez. Entsprechend weist das Füllstück 20 vier Wandungen auf, nämlich zwei Wandungen 25, 26 die sich jeweils entlang der Schachtel-Vorderwand 17 bzw. der Schachtel-Rückwand 21 erstrecken, sowie zwei dazwischen verlaufende schräggerichtete Wandungen 27, 28. Eine Besonderheit der Wandung 26 im Bereich der Schachtel-Rückwand 21 besteht darin, dass diese durch zwei überlappende Faltlappen gebildet ist, die vorzugsweise vollflächig bzw. im Wesentlichen vollflächig über die gesamte Fläche der Wandung 26 überlappen und miteinander verbunden sind. Auf diese Weise kann die Stabilität der Schachtel-Rückwand 21 bzw. der Rückwand der Packung 10 erhöht werden.

Wie bereits geschildert sind die beiden Zigarettengruppen 19 und das Füllstück 20 zusammen in eine gemeinsame Innenumhüllung 22 eingehüllt, zur Bildung eines Zigarettenblocks 29.

Der auf diese Weise gebildete Zigarettenblock 29 füllt den Querschnitt des Schachtelteils 12 bzw. den Innenraum der Packung 10 in üblicher Weise aus. Die beiden Zigarettengruppen 19 liegen jeweils unmittelbar am Füllstück 20 an, wobei das Füllstück 20 sich über die volle Höhe der Zigarettengruppen 19 erstreckt. Es versteht sich, dass das Füllstück 20 auch eine geringere Höhe aufweisen kann.

Ein zweites Ausführungsbeispiel einer Packung ist in Fig. 3 gezeigt. Auch hier sind zwei Zigarettengruppen 19 mit jeweils zehn Zigaretten 11 sowie ein Füllstück 20 vorgesehen.

Auch in diesem Fall ist das Füllstück 20 zentral in der Packung 10 bzw. dem Schachtelteil 12 angeordnet und trennt die beiden Zigarettengruppen 19.

Ein erster Unterschied zum Ausführungsbeispiel gemäß Fig. 2 besteht darin, dass es sich bei der Packung 10 um eine Packung 10 mit abgerundeten Packungskanten 23 handelt.

Weiterhin entspricht die Formation der Zigarettengruppen 19 einer 3-2-2-3-Formation.

Im Querschnitt ist das Füllstück 19 sechseckig ausgebildet, wobei zwei etwa gleichlange Wandungen 25, 26 einander gegenüberliegen und sich entlang der Schachtel-Vorderwand 17 bzw. der Schachtel-Rückwand 21 erstrecken. Diese werden von vier schräggerichteten Wandungen 27, 28, 30, 31 miteinander verbunden.

Auch in diesem Fall sind die Zigaretten 11 in benachbarten Reihen 24 in Normallage angeordnet und die Wandung 26 im Bereich der Schachtel-Rückwand 21 ist doppellagig ausgebildet.

Das dritte Ausführungsbeispiel gemäß Fig. 4 unterscheidet sich von den beiden vorhergehenden Ausführungsbeispielen dadurch, dass es sich bei der Packung 10 um eine Packung 10 mit schrägverlaufenden Packungskanten 23 handelt (Oktagonal-Packung).

Das Füllstück 20 hat im Querschnitt die Form eines regelmäßigen Sechsecks und trennt zwei Zigarettengruppen 19 mit jeweils zwölf Zigaretten in fünf Reihen 24, wobei die Zigaretten 11 benachbarter Reihen 24 jeweils in Sattellage zueinander angeordnet sind.

Ein viertes Ausführungsbeispiel einer Packung 10 ist in Fig. 5 gezeigt. Dabei ist seitlich im Schachtelteil 12 ein Füllstück 20 angeordnet und eine einzelne Zigarettengruppe 19 füllt den Rest des Innenraums des Schachtelteils 12.

Das Füllstück 20 ist im Querschnitt fünfeckig ausgebildet mit fünf Wandungen 25, 26, 27, 28, 30. Die Wandung 30 im Bereich einer Schachtel-Seitenwand 18 ist doppellagig ausgebildet.

Die Zigarettengruppe 19 besteht aus fünf Reihen 24 von Zigaretten 11 in einer 5-4-4-4-5-Formation in Sattellage.

Es versteht sich, dass die soweit beschriebenen Packungen 10 natürlich nur Beispiele darstellen und Abwandlungen, wie teilweise bereits erwähnt, möglich sind. Insbesondere ist die Form der Füllstücke 20 nicht auf die beschriebenen Formen beschränkt, sondern es kommen beliebige geometrische Formen in Frage, entsprechend der gewünschten Formation der oder jeder Zigarettengruppe 19. Denkbar sind insbesondere auch unsymmetrische Formen.

Nachfolgend wird die Herstellung derartiger Packungen 10 am Beispiel der in Fig. 1 und 2 gezeigten Packung 10 beschrieben. Die Vorrichtung ist aber mit geringfügigen Modifikationen auch zur Herstellung von Packungen 10 gemäß Fig. 3 bis 5 oder weiterer Varianten geeignet.

Zentrales Organ der Vorrichtung ist ein Förderer 32, auf dem die oder jede Zigarettengruppe 19 mit dem oder jedem Füllstück 20 in einer packungsgemäßen Anordnung zusammengeführt wird.

Im vorliegenden Fall ist der Förderer 32 in Art eines Taschenkettenförderers ausgebildet und verfügt über mehrere Taschen 33, die am Umfang des Förderers 32 angeordnet sind. Die Taschen 33 sind mit konstantem Abstand zueinander angeordnet und mit ihrer Längserstreckung quer zur Transportrichtung des Förderers 32 ausgerichtet. Selbstverständlich können die Taschen 33 auch an einem anderen geeigneten Förderer angeordnet sein, beispielsweise einem Revolver oder dergleichen.

Entsprechend der herzustellenden Packung 10 gemäß Fig. 1 und 2 weist jede Tasche 33 mehrere Aufnahmen 34, 35, 36 auf für jeweils ein Füllstück 20 oder eine Zigarettengruppe 19.

Die Aufnahmen 34, 35, 36 sind voneinander durch Wandungen 37, 38 getrennt. Ferner sind die Aufnahmen 34, 35, 36 außenseitig durch Wandungen 39, 40, 41, 42 der Tasche 33 begrenzt.

Die Aufnahmen 34, 35, 36 sind im Querschnitt jeweils an den Querschnitt der Zigarettengruppe 19 bzw. des Füllstücks 20 angepasst. Entsprechend sind die Aufnahmen 34 und 36 für die Zigarettengruppen 19 im Querschnitt etwa dreieckig ausgebildet, wohingegen die Aufnahme 35 für das Füllstück 20 im Querschnitt im Wesentlichen trapezförmig ausgebildet ist.

Im vorliegenden Fall ist vorgesehen, dass zunächst die Füllstücke 20 in die Aufnahmen 35 eingeschoben werden, bevor danach in einem zweiten Schritt die Zigarettengruppen 19 in die Aufnahmen 34 und 36 eingeschoben werden.

Die Zuführung der Füllstücke 20 zum Förderer 32 erfolgt mit Hilfe eines weiteren Förderers 43, der im vorliegenden Fall als Übergaberevolver ausgebildet ist.

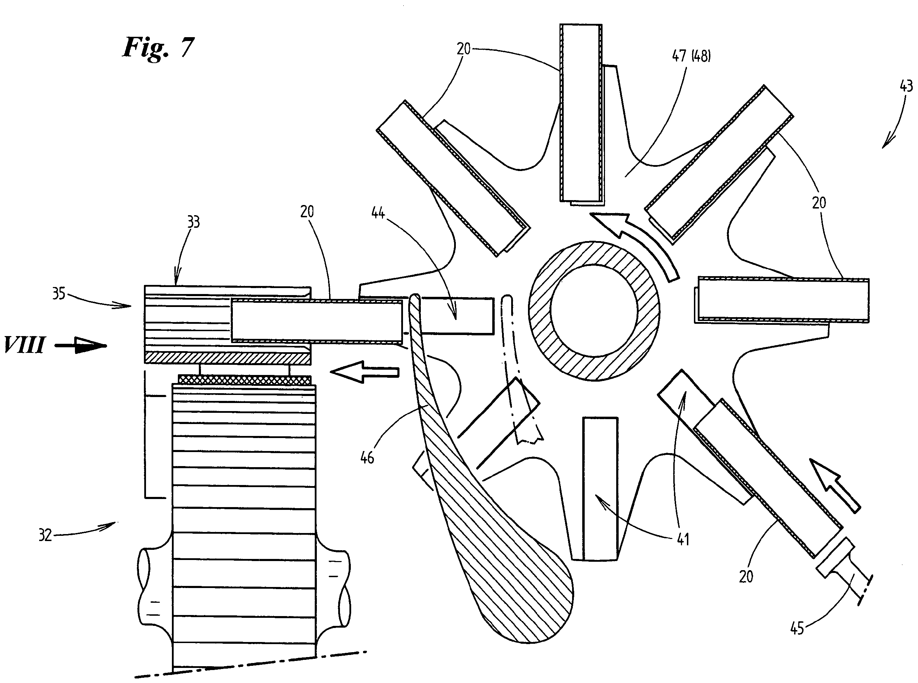

Der Förderer 43 verfügt über Taschen 44, die am Umfang des Übergaberevolvers verteilt angeordnet sind und in die fertig gefaltete Füllstücke 20 radial eingeschoben werden können, wozu ein Schieber 45 dient. Nach teilweisem Umlauf der Füllstücke 20 am Förderer 43 werden die Füllstücke 20 nacheinander mittels eines weiteren Schiebers 46 radial aus dem Förderer 43 aus- und in eine benachbarte Tasche 33 des Förderers 43 eingeschoben (Fig. 7).

Der Übergaberevolver ist im vorliegenden Fall durch beabstandete Revolverscheiben 47, 48 gebildet, zwischen denen der Schieber 46 angeordnet ist. Zudem sind zwei Übergaberevolver 43 nebeneinander angeordnet, sodass gleichzeitig zwei Füllstücke 20 in zwei benachbarte Taschen 33 eingeschoben werden können. Die Zuführung der Füllstücke 20 zu den Taschen 33 des Förderers 32 erfolgt also in mehrbahinger Arbeitsweise.

Im nächsten Schritt werden die Zigarettengruppen 19 den Taschen 33 bzw. deren Aufnahmen 34, 36 zugeführt.

Zigaretten 11 sind in einem Zigarettenmagazin 49 gespeichert und werden im Bereich einer Unterseite des Zigarettenmagazins 49 durch einen Zigarettenstößel 50 als Zigarettengruppe 19 aus dem Magazin 49 aus- und in eine benachbarte Tasche 33 des Förderers 32 eingeschoben. Die ausgeschobenen Zigarettengruppen 19 sind in einer Formation gemäß Fig. 2 angeordnet.

Hinsichtlich des Einschiebens der Zigarettengruppen 19 kann vorgesehen sein, dass der Zigarettenstößel 50 zwei Zigarettengruppen 19 gleichzeitig in die beiden Aufnahmen 34, 36 einer Tasche 33 einschiebt. Dies kann aber auch mit separaten Zigarettenstößeln 50 erfolgen.

Vorzugsweise erfolgt auch die Zuführung der Zigarettengruppen 19 zu den Taschen 33 in mehrbahniger Arbeitsweise. Im gezeigten Ausführungsbeispiel werden jeweils gleichzeitig zwei Zigarettengruppen 19 in zwei benachbarte Taschen 33 eingeschoben.

Nachdem im Bereich des Förderers 32 die Taschen 33 mit Zigarettengruppen 19 und Füllstücken 20 befüllt wurden, werden diese an einen nachfolgenden Förderer 51 übergeben.

Die Übergabe erfolgt mittels eines Schiebers 52, der den Inhalt einer Tasche 33, also im vorliegenden Fall zwei Zigarettengruppen 19 und ein Füllstück 20, zusammen in einem Arbeitsgang in eine entsprechend positionierte Tasche 53 des benachbarten Förderers 51 einschiebt. Im vorliegenden Fall ist der Förderer 51 als Übergaberevolver mit mehreren am Umfang angeordneten Taschen 53 ausgebildet. Auch hier sind selbstverständlich andere Lösungen möglich.

Eine Besonderheit des Schiebers 52 besteht darin, dass dieser aus mehreren Schieberelementen 54, 55, 56 gebildet ist, die jeweils einer Aufnahme 34, 35, 36 der Tasche 33 zugeordnet sind. Die Schieberelemente 54, 55, 56 sind außerhalb der Tasche 33 über Verbindungselemente 57, 58, 59 zu einer zusammen bewegbaren Einheit (Schieber 52) verbunden.

Eine erste Besonderheit besteht darin, dass Wandungen der Tasche 33 schlitzartige Ausnehmungen 60, 61, 62 aufweisen, durch die hindurch sich die Verbindungselemente 57, 58, 59 erstrecken. Entsprechend erstrecken sich die Ausnehmungen 60, 61, 62 durchgehend über die gesamte Länge der Tasche 33.

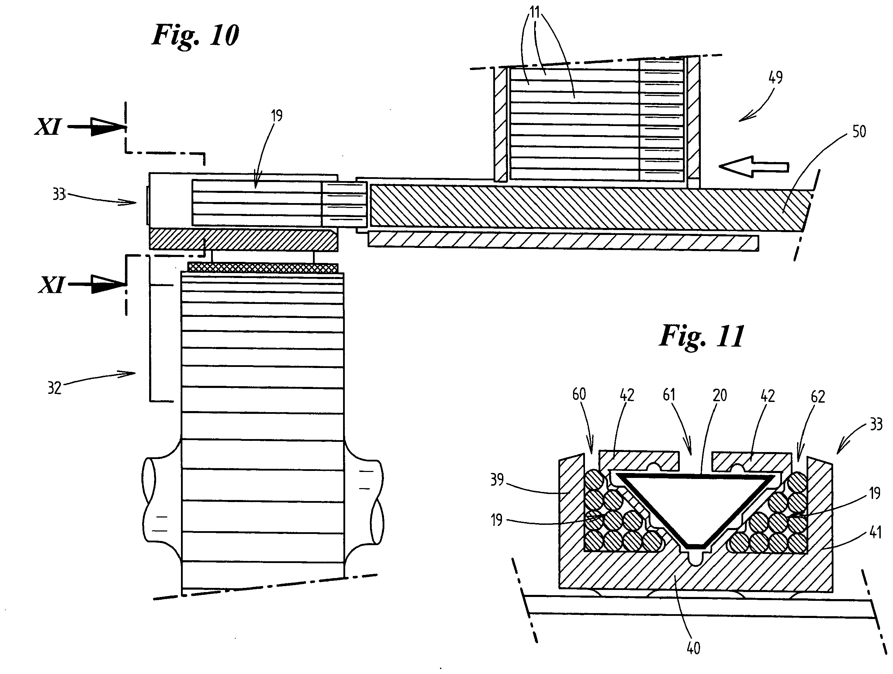

Die Breite der Ausnehmungen 60, 62 im Bereich der Aufnahmen 34, 36 ist so bemessen, dass diese geringer ist als der Durchmesser der Zigaretten 11, welche sich in den Aufnahmen 34, 36 befinden. Auf diese Weise kann verhindert werden, dass Zigaretten 11 durch die Ausnehmungen 60, 62 aus der Tasche 33 gelangen können (Fig. 11).

Die Ausnehmungen 60, 61, 62 sind jeweils im Bereich einer Oberseite der Taschen 33, nämlich im Bereich der Wandung 42 ausgebildet.

Eine weitere Besonderheit betrifft Maßnahmen, die einen sicheren Ausschub des Füllstücks 20 gewährleisten sollen. Das als Hülse ausgebildete Füllstück 20 ist in Längserstreckung in der Aufnahme 35 angeordnet, also derart, dass es im Bereich seiner Stirnseiten vom Schieber 52 bzw. dem mittleren Schieberelement 55 erfasst werden kann. Da aber die Hülse im Bereich der Stirnseite größtenteils offen ist, steht als Kontaktfläche für den Schieber 55 nur der vergleichsweise dünne Rand des Mantels der Hülse zur Verfügung. Somit besteht das Risiko, dass das Füllstück 19 nicht ordnungsgemäß durch den Schieber 52 erfasst werden kann.

Zur Lösung dieses Problems ragt der Schieber 52 seitlich über die äußere Kontur des Füllstücks 20 hinaus, also quer zur Ausschubrichtung.

Konkret ist dies im vorliegenden Fall so gelöst, dass der Schieber 52 bzw. das Schieberelement 55 nasenartige Abschnitte 63 aufweist, mit denen der Schieber 52 bzw. das Schieberelement 55 über die Kontur des Füllstücks 20 seitlich heraussteht.

Entsprechend der Anordnung der Abschnitte 63 sind in den Wandungen 37, 38, 40, 42 korrespondierende Vertiefungen 64 eingeformt, in die die Abschnitte 63 eintreten. Entsprechend sind die Vertiefungen 64 als durchgehende nutenartige Einschnitte innenseitig an den genannten Wandungen ausgebildet.

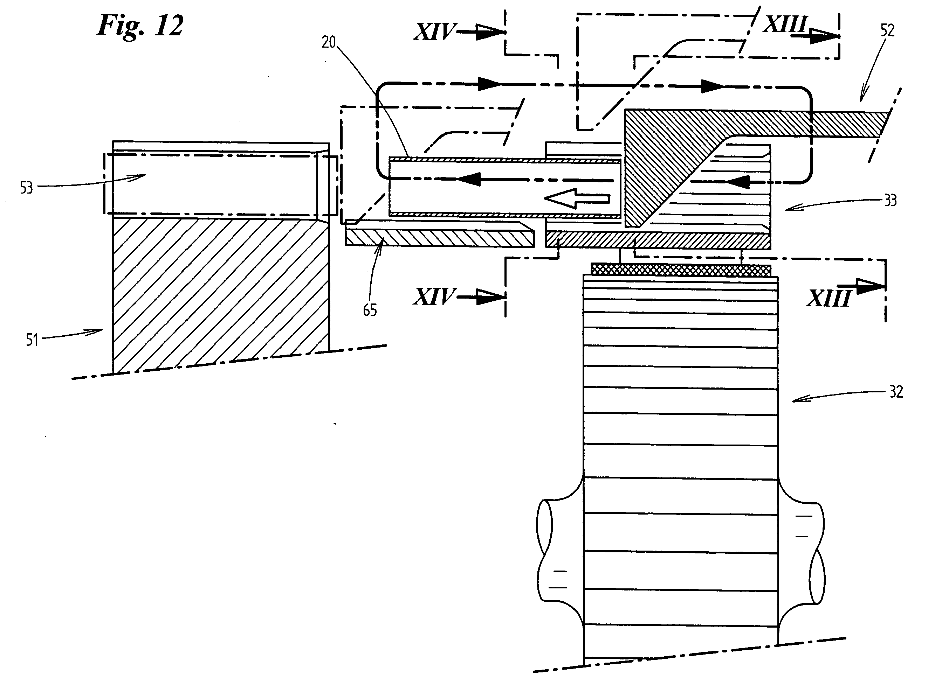

Die Bewegungsbahn des Schiebers 52 ist in Fig. 12 gezeigt. Entsprechend wird der Schieber 52 nach dem Einschieben eines Packungsinhalts in eine Tasche 53 des Förderers 51 zunächst nach oben bewegt und danach zurückgezogen und mit einer Abwärtsbewegung in die Ausgangsstellung bewegt.

Der Abstand zwischen dem ausschubseitigen Ende der Tasche 33 und der Tasche 53 wird durch eine Führung 65 überbrückt, die auch in Art eines Mundstücks ausgebildet sein kann.

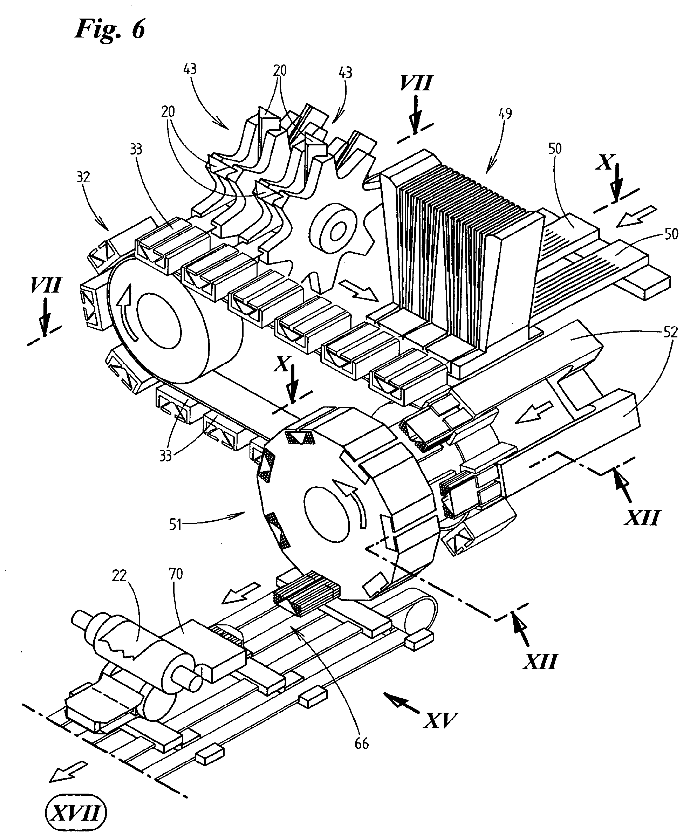

Wie Fig. 6 zeigt, erfolgt auch die Übergabe der Packungsinhalte vom Förderer 32 auf den Förderer 51 in mehrbahniger Arbeitsweise mittels (zweier) miteinander verbundener Schieber 52. Denkbar ist natürlich auch eine einbahnige Arbeitsweise.

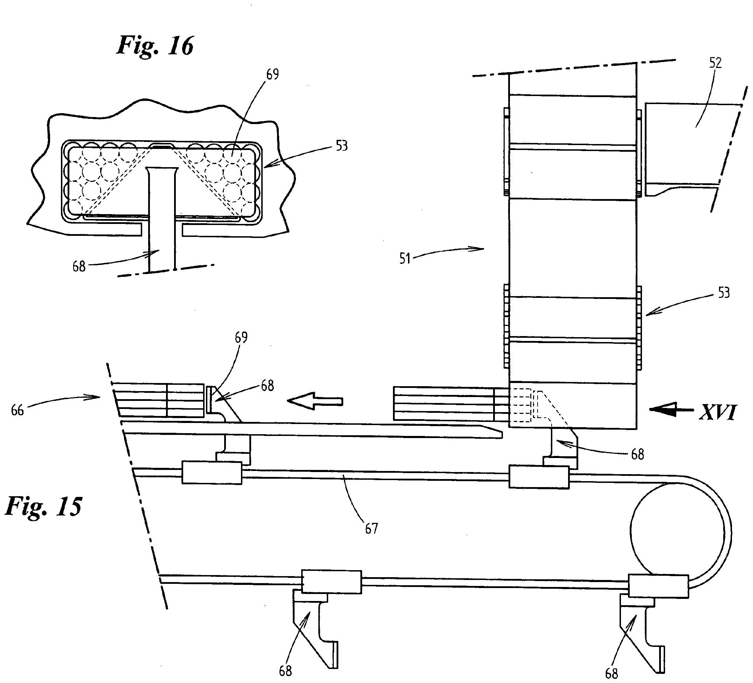

Vom Förderer 51 werden die Packungsinhalte an eine Zigarettenbahn 66 übergeben. Dies erfolgt mittels eines weiteren Förderers 67 an dem außenseitig Mitnehmer 68 umlaufend angeordnet sind. Die Mitnehmer 68 verfügen über Schieberplatten, die in die Taschen 53 des Förderers 51 eintauchen und jeweils einen Packungsinhalt ausschieben und entlang der Zigarettenbahn 66 fördern (Fig. 15 und 16).

Eine weitere Besonderheit betrifft die Orientierung der Zigarettengruppen 19 und Füllstücke 20 während des Transports. Diese werden dem Förderer 32 längsaxial zugeführt, also mit ihrer Längserstreckung parallel zur Förderrichtung weisend. Auch die Übergabe vom Förderer 32 zum anschließenden Förderer 51 erfolgt entsprechend. Gleiches gilt für die Übergabe vom Förderer 51 an die Zigarettenbahn 66. Es versteht sich, dass diese Art des Abschubs nicht zwangsläufig komplett verwirklicht werden muss, sondern dass auch nur einige oder ein einzelner Übergabeschritt auf diese Weise erfolgen kann.

Während des weiteren Transports entlang der Zigarettenbahn 66 wird der Packungsinhalt durch nicht gezeigte Führungen in Formation gehalten, bis dieser in ein Mundstück 70 eingeführt wird. Im Anschluss an das Mundstück 70 wird der Packungsinhalt bestehend aus zwei Zigarettengruppen 19 und einem Füllstück 20 in die Innenumhüllung 22 eingehüllt und so der Zigarettenblock 29 gebildet. Dies erfolgt in aus dem Stand der Technik bekannter Weise.

Im Anschluss daran können Kragen 71 über eine quergerichtete Kragenbahn 72 zugeführt werden. Die Kragen 71 können aus einer fortlaufenden Materialbahn 73 mit Hilfe von Messerwalzen 74 abgetrennt werden.

Im Bereich einer Bühne 75 werden Zigarettenblock 29 und Kragen 71 übereinander positioniert und mit Hilfe eines Einschiebers 76 in eine Tasche 77 eines anschließenden Faltrevolvers 78 bzw. in einen darin befindlichen teilweise gefalteten Zuschnitt 79 für die Packung 10 eingeschoben.

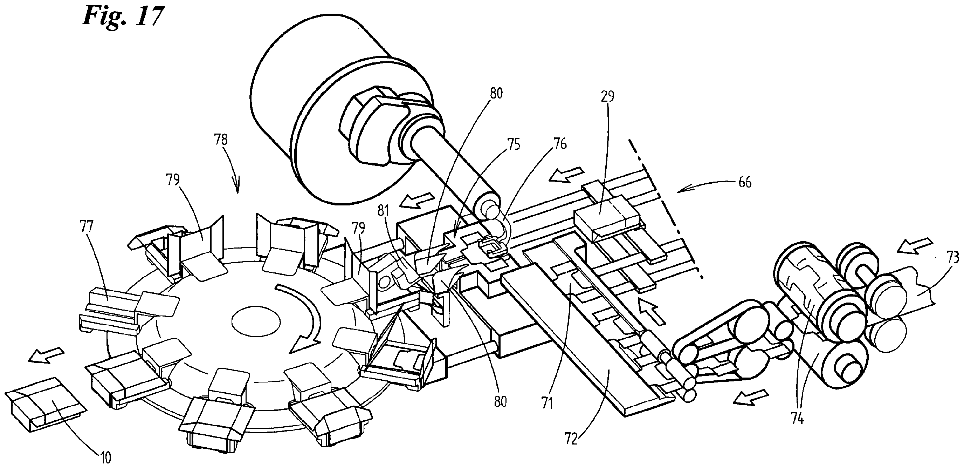

Fig. 17 zeigt ferner noch Faltweichen 80 für den Kragen 71, sowie ein Organ 81 zum Eindrücken des Kragens 71 und des Zigarettenblocks 29 in die Tasche 77.

Während des weiteren Umlaufs auf dem Faltrevolver 78 wird die Packung 10 bzw. der Zuschnitt 79 durch Faltung komplettiert und die in wesentlichen Teilen fertiggestellte Packung 10 ausgeschoben. Fig. 17 zeigt, dass lediglich Faltlappen im Bereich von Schmalseitenwänden der Packung 10 noch nicht miteinander verbunden sind. Dies kann im Anschluss an den Faltrevolver 78 erfolgen.

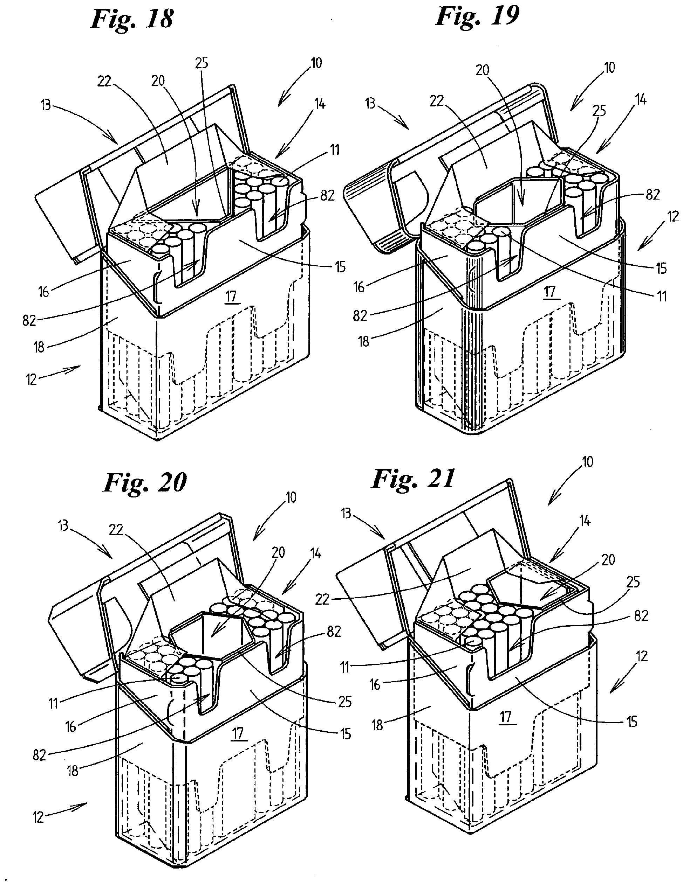

Fig. 18 bis 21 zeigen Varianten der in Fig. 1 bis 5 gezeigten Packungen 10. Dabei stellt die Fig. 18 gezeigte Packung 10 eine Variante der in Fig. 1 und 2 gezeigten Packung 10 dar. Fig. 19 zeigt eine Variante der in Fig. 3 gezeigten Packung 10. Fig. 20 zeigt eine Variante der in Fig. 4 gezeigten Packung 10. Fig. 21 zeigt eine Variante der in Fig. 5 gezeigten Packung 10.

In allen vier Varianten gemäß Fig. 18 und 21 unterscheiden sich die Packungen 10 von den entsprechenden Packungen gemäß Fig. 1 bis 5 dadurch, dass das Füllstück 20 durch den Kragen 14 wenigstens teilweise verdeckt wird.

Genauer gesagt wird jeweils die zur Schachtel-Vorderwand 17 weisende Wandung 25 durch den Kragen 14 verdeckt.

Ermöglicht wird dies dadurch, dass die üblichen Ausnehmungen 82 in der Kragen-Vorderwand 15 zur Erleichterung der Entnahme von Zigaretten 11 aus der Packung 10 sich nicht über im wesentlichen die gesamte Breite der Kragen-Vorderwand 15 erstreckt, wie in Fig. 1 gezeigt, sondern die Ausnehmungen 82 sind seitlich versetzt zur Position des Füllstücks 20 angeordnet, sodass die Kragen-Vorderwand 15 außerhalb der Ausnehmung 82 die Wandung 26 des Füllstücks 20 verdeckt.

Bei den Packungen 10 gemäß Fig. 18 bis 20, bei denen das Füllstück 20 zentral im Schachtelteil 12 angeordnet ist, sind jeweils zwei Ausnehmungen 82 beiderseits des Füllstücks 20 angeordnet. Bei der Packung 10 gemäß Fig. 21, bei der das Füllstück 20 seitlich im Schachtelteil 12 angeordnet ist, ist nur eine Ausnehmung 82 vorgesehen, die seitlich versetzt zum Füllstück angeordnet ist.

Die oder jede Ausnehmung 82 kann so bemessen sein, dass der verbleibende Rest der Kragen-Vorderwand 15 exakt der Breite und Höhe der Wandung 25 des Füllstücks 20 entspricht. Dankbar ist aber auch, dass die Breite größer ist als die entsprechende Abmessung der Wandung 25 des Füllstücks 20.

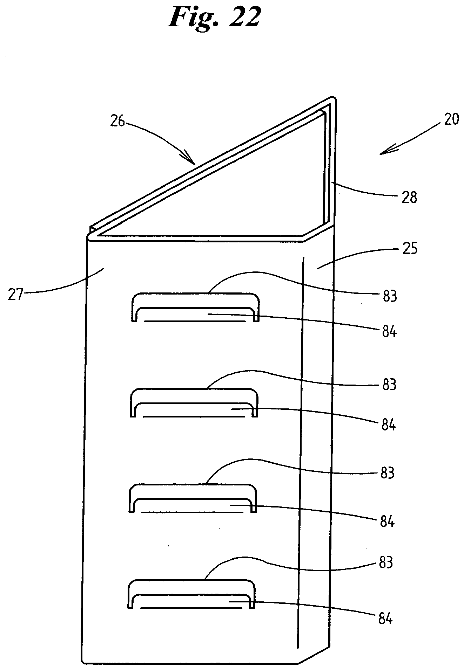

Fig. 22 zeigt eine Variante des Füllstücks 20 gemäß der in Fig. 1, 2 und 18 gezeigten Packung 10. Dabei sind in einer oder mehreren Wandungen 27, 28 Stanzschnitte 83 vorgesehen, die jeweils eine Lasche 84 definieren.

Es sind jeweils mehrere Laschen 84 übereinander und mit Abstand zueinander in den Wandungen 27, 28 ausgebildet.

Die Stanzschnitte 83 sind U-förmig ausgebildet.

Die durch die Stanzschnitte 83 gebildeten Laschen 84 sind quer zur jeweiligen Wandung 27, 28 gefaltet, um auf diese Weise die Stabilität des Füllstücks 20 zu erhöhen. Vorzugsweise werden die Laschen 84 in das Füllstück 20 hinein gefaltet.

Es versteht sich, dass die Anzahl und/oder Abmessungen und/oder Positionierung der Stanzschnitte 83 bzw. Laschen 84 nach den Anforderungen des jeweiligen Einzelfalls gewählt werden kann.

Denkbar ist weiterhin, dass Stanzschnitte 83 bzw. Laschen 84 nur in einer Wandung 27, 28 oder in mehreren Wandungen des Füllstücks 20 vorgesehen sein können. Beispielsweise ist es denkbar, dass auch in der Wandung 26 Stanzschnitte 83 bzw. Laschen 84 vorgesehen sein können.

Die vorstehend in Verbindung mit dem Füllstück 20 der Packung 10 gemäß Fig. 1, 2 und 18 beschriebene Lösung ist sinngemäß natürlich auch auf die andere Varianten des Füllstücks 20 übertragbar, insbesondere auf die anderen in der Anmeldung gezeigten Varianten.

Die vorstehend beschriebenen Packungen 10, mit dem in besonderer Weise an das Füllstück angepassten Kragen 14, stellen eine eigenständige Besonderheit dar. Dies gilt auch für die zuletzt beschriebene Variante des Füllstücks 20.

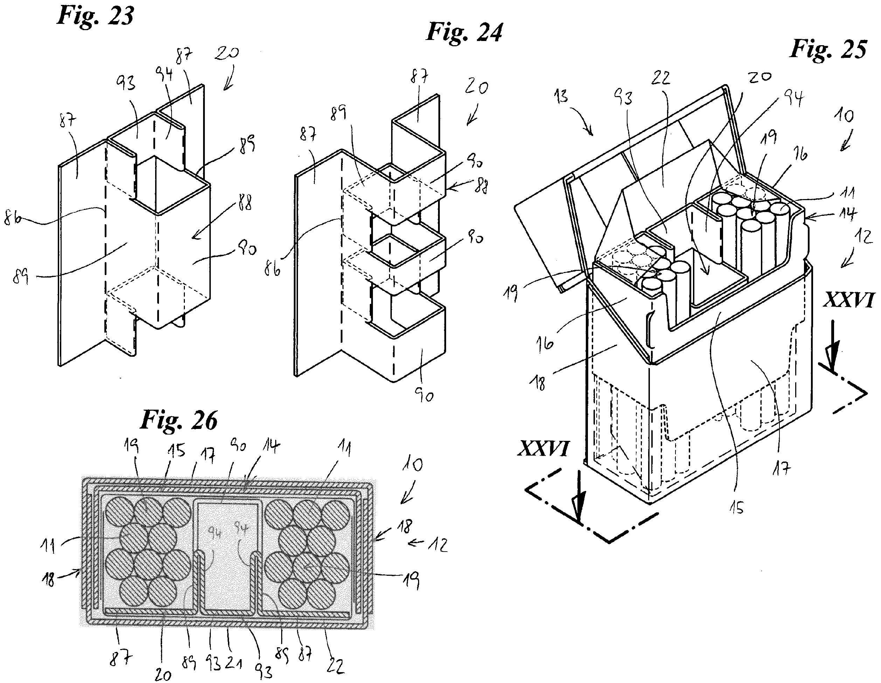

In Fig. 23 bis 26 ist eine weitere Variante einer Packung 10 für Zigaretten 11 gezeigt. Wie schon in den meisten bisher beschriebenen Varianten sind zwei (oder mehr) Zigarettengruppen 19 zusammen mit einem Füllstück 20 von einer Innenumhüllung 22 umgeben. Das Füllstück 20 ist dabei zentral zwischen den beiden Zigarettengruppen 19 angeordnet. Vorzugsweise weisen die beiden Zigarettengruppen 19 etwa die gleiche Anzahl an Zigaretten 11 auf.

Eine Besonderheit besteht hinsichtlich des Füllstücks 20, welches sich über im Wesentlichen die gesamte Breite des Zigarettenblocks 29 bzw. der Schachtel-Rückwand 21 erstreckt. Auf diese Weise kann sich das Füllstück 20 beiderseits an den gegenüberliegenden Schachtel-Seitenwänden 18 abstützen, wodurch die Lage des Füllstücks 20 fixiert wird.

Darüber hinaus erstreckt sich das Füllstück 20 auch noch in Richtung der Kragen-Vorderwand 15 bzw. der Schachtel-Vorderwand 17 und stützt sich auch an diesen Wandungen ab.

Das Füllstück 20 wird durch entsprechende Faltung eines Zuschnitts 85 gebildet. Hierzu sind im Zuschnitt 85 Faltlinien und Stanzschnitte angebracht, entlang derer die entsprechenden Wandungen des Zuschnitts 85 gefaltet werden. Hier sind zunächst zwei Faltlinien 86 zu nennen, die sich über die gesamte Höhe des Zuschnitts 85 erstrecken und jeweils einen randseitigen Faltlappen 87 begrenzen. Die Faltlappen 87 stützen sich jeweils mit einem freien, seitlichen Rand an den jeweiligen Schachtel-Seitenwänden 18 ab.

Der zwischen den beiden Faltlinien 86 liegende Abschnitt des Zuschnitts 85 dient zur Bildung eines dreidimensionalen Füllkörpers 88, der zwischen den beiden Zigarettengruppen 19 angeordnet ist, und den Raum zwischen denselben im wesentlichen füllt.

Der Füllkörper 88 ist im vorliegenden Fall im Querschnitt rechteckig ausgebildet, mit zwei Seitenwänden 89, die sich ausgehend von der Ebene der Schachtel-Rückwand 21 bis zur Ebene der Schachtel-Vorderwand 17 erstrecken und im wesentlichen senkrecht zu diesen gerichtet bzw. den Faltlappen 87 sind. Ferner verfügt der Füllkörper 88 über eine Vorderwand 90, die die beiden Seitenwände 89 verbindet und parallel zur Schachtel-Vorderwand 17 verläuft.

Eine Besonderheit besteht darin, dass sich der Füllkörper 88 nicht durchgehend über die gesamte Höhe der Zigarettengruppen 19 und/oder des Schachtelteils 12 erstreckt, sondern dass die Wandungen 93 des Zuschnitts 85 bereichsweise in die Ebene der Faltlappen 87 gefaltet sind. Hierzu weist der Zuschnitt 85 zum einen horizontale Stanzschnitte 91 auf, sowie zusätzliche Faltlinien 92 auf, die eine entsprechende Positionierung der Wandungen 93 ermöglichen.

Der obere Stanzschnitt 91 ist dabei etwa auf Höhe der Oberkante des Kragen-Vorderwand 15 im Bereich der Ausnehmung 82 des Kragens 14 angeordnet oder geringfügig darüber.

Der Zuschnitt 85 wird wie in Fig. 23 gezeigt so gefaltet, dass die Wandungen 93 in der Ebene der Faltlappen 87 liegen und somit in diesem Bereich das Füllstück 20 über im wesentlichen die gesamte Breite des Schachtelteils 12 durchgehend ausgebildet ist. Auf diese Weise wird das Füllstück 20 in der entsprechenden Richtung ausgesteift.

Im Ausführungsbeispiel gemäß Fig. 23 befinden sich die Wandungen 93 jeweils in einem oberen und unteren Randbereich des Zuschnitts 85. Im oberen Randbereich hat dies auch noch den Vorteil, dass die Entnahme der Zigaretten 11 vereinfacht wird. Durch die umgefalteten Schenkel 94 der Seitenwände 89 enden diese auf Höhe der Wandungen 93 mit Abstand zur Kragen-Vorderwand 15, so dass insbesondere die Zigaretten 11 in einem vorderen Eckbereich der Zigarettengruppe 19 angrenzend zum Füllkörper 88 leichter erfasst und entnommen werden können.

Das in Fig. 24 gezeigte Füllstück 20 stellt eine Variante des in Fig. 23 gezeigten Füllstücks dar, bei dem zwei Wandungen 93 mit Abstand zur Oberseite und Unterseite des Füllstücks 20 vorgesehen sind. Bei dieser Lösung wird auf den Vorteil der leichteren Entnahme der Zigaretten 11 verzichtet.

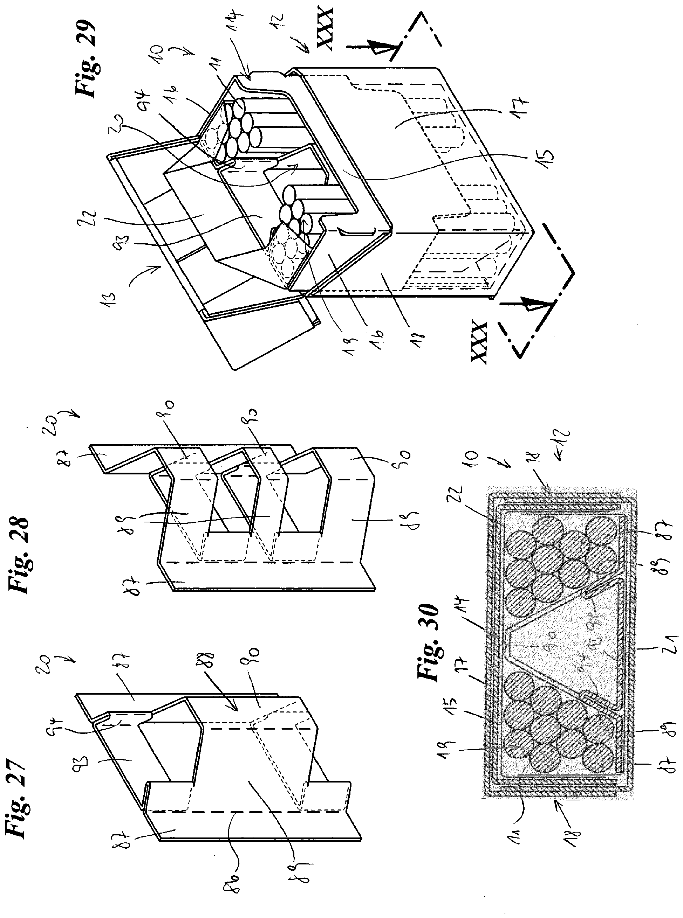

In Fig. 27 bis 30 ist eine Variante der in Fig. 23 bis 26 gezeigten Lösung gezeigt, bei dem der Füllkörper 88 des Füllstücks 20 eine trapezförmigen Querschnitt aufweist.

Die die Wandungen 93 bildende Basis des Trapezes ist dabei entlang der Schachtel-Rückwand 21 angeordnet, wohingegen die gegenüberliegende kürzere Grundseite, die die Vorderwand 90 bildet, sich entlang der Kragen-Vorderwand 15 und/oder der Schachtel-Vorderwand 17 erstreckt.

Die beiden Schenkel des Trapezes, die die Seitenwände 89 bilden, erstrecken sich ausgehend von der Schachtel-Rückwand 21 konvergierend in Richtung der Kragen-Vorderwand 15 bzw. der Schachtel-Vorderwand 17.

Aufgrund der Querschnittsform des Füllkörpers 88 sind die Schenkel 94 deutlich kürzer ausgebildet, als bei der Variante gemäß Fig. 23 bis 26.

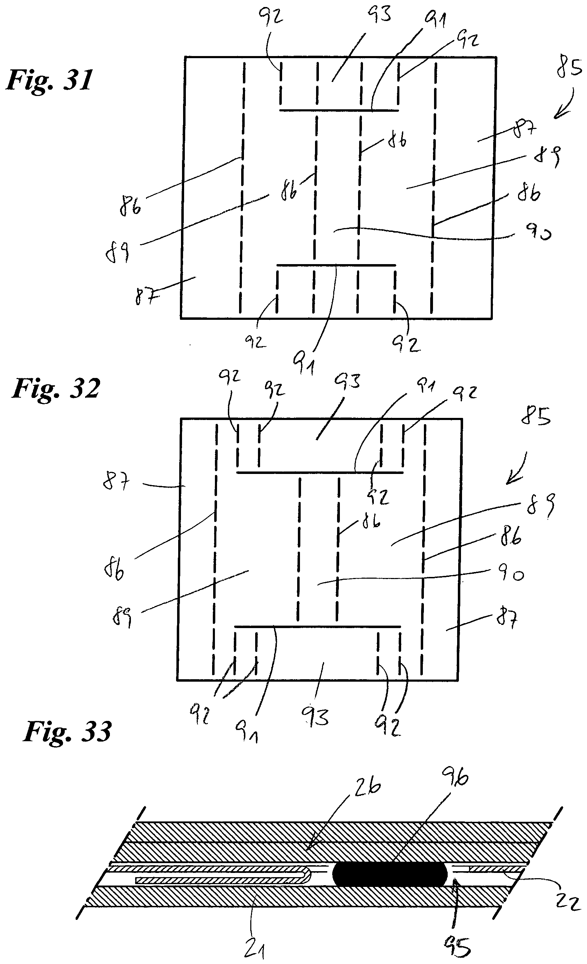

Fig. 32 zeigt einen Zuschnitt 85 entsprechend der Darstellung in Fig. 31.

Eine weitere Möglichkeit zur Fixierung des Füllstücks 20 ist in Fig. 33 gezeigt. Demnach wird die der Schachtel-Rückwand 21 zugewandte Wandung 26 des Füllstücks 20 mit der Innenseite der Schachtel-Rückwand 21 verklebt.

Hierzu wird eine Öffnung 95 im Material der Innenumhüllung 22 geschaffen. Dies kann beispielsweise durch eine entsprechende Stanzung, Perforation oder dergleichen des Materials der Innenumhüllung 22 erfolgen. Vorzugsweise erfolgt dies derart, dass das dabei das Material der Innenumhüllung 22 im Bereich der Öffnung 95 nicht komplett abgetrennt wird, sondern um eine Restverbindung umgefaltet wird.

Der Leim 96 zur Fixierung des Füllstücks 20 kann entweder auf die Schachtel-Rückwand 21 oder auf das Füllstück 20 aufgetragen werden und gegebenenfalls nach dem Zusammenfügen der Teile (re-)aktiviert werden.

Es ist auch denkbar, dass die Fixierung des Füllstücks 20 an der Packung 10 im Bereich von anderen Seitenwänden erfolgt, gegebenenfalls auch zusätzlich zur Fixierung im Bereich der Rückseite.

## Patentansprüche

1. Packung für Zigaretten (11), wobei wenigstens eine Gruppe (19) von Zigaretten (11) als Packungsinhalt in der Packung (10) angeordnet ist, und wobei die Packung (10) ein Schachtelteil (12) mit Schachtel-Vorderwand (17), Schachtel-Rückwand (21) und Schachtel-Seitenwänden (18) aufweist und wobei im Schachtelteil (12) ein Kragen (14) mit Kragen-Vorderwand (15) und hierzu benachbarten Kragen-Seitenwänden (16) angeordnet ist, die innenseitig im Bereich der Schachtel-Vorderwand (17) und der beiden Schachtel-Seitenwände (18) anliegen, und wobei wenigstens eine Abmessung der wenigstens einen Zigarettengruppe (19) nicht der entsprechenden Abmessung des Innenraums der Packung (10) entspricht, und wobei die wenigstens eine abweichende Abmessung durch ein zusätzliches Element in der Packung, nämlich wenigstens ein Füllstück (20) ausgeglichen wird, und wobei das Füllstück (20) zusammen mit wenigstens einer Zigarettengruppe (19) in eine Innenumhüllung (22) eingehüllt ist, und wobei weiter vorgesehen ist, dass sich das Füllstück (20) über im Wesentlichen die gesamte Tiefe des Schachtelteils (12) erstreckt und sich beiderseits an der Schachtel-Vorderwand (17) und/oder der Kragen-Vorderwand (15) einerseits und der Schachtel-Rückwand (21) andererseits abstützt, und wobei sich das Füllstück (20) über im Wesentlichen die gesamte Breite der Schachtel-Rückwand (21) erstreckt und sich beiderseits an den gegenüberliegenden Schachtel-Seitenwänden (18) abstützt, und wobei das Füllstück (20) einen dreidimensionalen Füllkörper (88) aufweist, der durch Falten von Wandungen eines Zuschnitts (85) aus Verpackungsmaterial gebildet ist, **dadurch gekennzeichnet, dass**
a) der Füllkörper (88) zwischen zwei Zigarettengruppen (19) angeordnet ist und die wenigstens eine abweichende Abmessung ausgleicht,
b) der Füllkörper (88) als Hohlkörper ausgebildet ist und wenigstens vier aufrechte Längskanten aufweist, wobei der Füllkörper (88) im Querschnitt vorzugsweise rechteckig oder trapezförmig ausgebildet ist,
c) beiderseits des Füllkörpers (88) jeweils ein Faltlappen (87) des Füllstücks (20) ausgebildet ist, die sich entlang der Schachtel-Rückwand (21) erstrecken, und dass wenigstens eine Wandung (93) des Zuschnitts (85) in die Ebene der Faltlappen (87) gefaltet ist, um ein wenigstens teilweise im Bereich der Wandung (93) ein über die im wesentlichen gesamte Breite der Schachtel-Rückwand (21) durchgehendes Füllstück (20) zu bilden, zur Aussteifung des Füllstücks in der entsprechenden Richtung,
d) der Füllkörper (88) Seitenwände (89) aufweist, die sich ausgehend von der Schachtel-Rückwand (21) in Richtung der Schachtel-Vorderwand (17) erstrecken, wobei die Seitenwände (89) sich nicht über die gesamte Höhe des Schachtelteils (12) erstrecken, derart, dass ein oberes Ende der Zigaretten (11) in einem vorderen Eckbereich der Zigarettengruppen (19) angrenzend zum Füllkörper (88) nicht an einer Seitenwand (89) anliegen und leichter erfasst und entnommen werden können.

## Claims

1. A pack (10) for cigarettes (11), wherein at least one group (19) of cigarettes (11) as the pack content is arranged in the pack (10), and wherein the pack (10) has a box part (12) with box front wall (17), box rear wall (21) and box side walls (18), and wherein there is arranged in the box part (12) a collar (14) with collar front wall (15) and collar side walls (16) which are adjacent thereto and which bear on the inner side in the region of the box front wall (17) and both box side walls (18), and wherein at least one dimension of the at least one cigarette group (19) does not correspond to the respective dimension of the interior space of the pack (10), and wherein the at least one deviating dimension is equalized by an additional element in the pack, namely at least one filler piece (20), and wherein the filler piece (20) is wrapped in an inner wrapper (22) conjointly with at least one cigarette group (19), and wherein it is further provided that the filler piece (20) extends across substantially the entire depth of the box part (12) and on either side is supported on the box front wall (17) and/or the collar front wall (15), on the one hand, and on the box rear wall (21), on the other hand, and wherein the filler piece (20) extends across substantially the entire width of the box rear wall (21) and on either side is supported on the opposite box side walls (18), and wherein the filler piece (20) has a three-dimensional filler body (88) which is formed by folding walls of a blank (85) of packaging material, **characterized in that**
a) the filler body (88) is disposed between two cigarette groups (19), equalizing the at least one deviating dimension,
b) the filler body (88) is configured as a hollow body and has at least four upright longitudinal edges, wherein the filler body (88) in the cross section is preferably configured so as to be rectangular or trapezoidal,
c) one folding flap (87) of the filler piece (20) is configured on either side of the filler body (88), said folding flaps (87) extending along the box rear wall (21), and **in that** at least one wall (93) of the blank (85) is folded into the plane of the folding flaps (87) so as to at least partially form a filler piece (20) in the region of the wall (93), said filler piece (20) continuing across substantially the entire width of the box rear wall (21) for the purpose of stiffening the filler piece in the corresponding direction.
d) the filler body (88) has side walls (89) which, emanating from the box rear wall (21), extend in the direction of the box front wall (17), wherein the side walls (89) do not extend across the entire height of the box part (12) in such a manner that an upper end of the cigarettes (11) in a front corner region of the cigarette groups (19) adjacent to the filler body (88) does not bear on any side wall (89) and can be gripped and removed more easily.

## Revendications

1. Paquet de cigarettes (11), dans lequel au moins un groupe (19) de cigarettes (11) est disposé en tant que contenu du paquet dans le paquet (10), et dans lequel le paquet (10) présente une partie de boîte (12) avec une paroi avant de boîte (17), une paroi arrière de boîte (21) et des parois latérales de boîte (18) et dans lequel, dans la partie de boîte (12), est disposé un col (14) avec une paroi avant de col (15) et des parois latérales de col (16) adjacentes à celle-ci, lesquelles s'appliquent du côté intérieur dans la région de la paroi avant de boîte (17) et des deux parois latérales de boîte (18), et dans lequel au moins une dimension de l'au moins un groupe de cigarettes (19) ne correspond pas à la dimension correspondante de l'espace intérieur du paquet (10), et dans lequel l'au moins une dimension différente est compensée par un élément supplémentaire dans le paquet, à savoir par au moins une pièce de remplissage (20), dans lequel la pièce de remplissage (20) est enveloppée conjointement avec au moins un groupe de cigarettes (19) dans un étui intérieur (22), et dans lequel il est en outre prévu que la pièce de remplissage (20) s'étende sur essentiellement toute la profondeur de la partie de boîte (12) et s'appuie des deux côtés contre la paroi avant de boîte (17) et/ou la paroi avant de col (15) d'une part, et la paroi arrière de boîte (21) d'autre part, et dans lequel la pièce de remplissage (20) s'étend sur sensiblement toute la largeur de la paroi arrière de boîte (21) et s'appuie des deux côtés contre les parois latérales de boîte opposées (18), et dans lequel la pièce de remplissage (20) présente un corps de remplissage tridimensionnel (88) qui est formé par pliage de parois d'une pièce découpée (85) en matériau d'emballage, **caractérisé en ce que**
a) le corps de remplissage (88) est disposé entre deux groupes de cigarettes (19) et compense l'au moins une dimension différente,
b) le corps de remplissage (88) est réalisé sous forme de corps creux et présente au moins quatre arêtes longitudinales droites, le corps de remplissage (88) présentant une section transversale de préférence rectangulaire ou trapézoïdale,
c) un volet de pliage (87) de la pièce de remplissage (20) est réalisé des deux côtés du corps de remplissage (88), lesquels volets s'étendent le long de la paroi arrière de boîte (21), et au moins une paroi (93) de la pièce découpée (85) est pliée dans le plan des volets de pliage (87) afin de former, au moins en partie dans la région de la paroi (93), une pièce de remplissage (20) continue sur sensiblement toute la largeur de la paroi arrière de boîte (21) pour rigidifier la pièce de remplissage dans la direction correspondante,
d) le corps de remplissage (88) présente des parois latérales (89) qui s'étendent à partir de la paroi arrière de boîte (21) dans la direction de la paroi avant de boîte (17), les parois latérales (89) ne s'étendant pas sur toute la hauteur de la partie de boîte (12) de telle sorte qu'une extrémité supérieure des cigarettes (11), dans une région de coin avant des groupes de cigarettes (19) adjacente au corps de remplissage (88) ne s'applique pas contre une paroi latérale (89) et puisse être saisie et enlevée plus facilement.
